# FASCICULE DE BREVET EUROPEEN

(11) **EP 3 427 837 B1**
(45) Date de publication et mention de la délivrance du brevet: **09.09.2020**
(21) Numéro de dépôt: 18183239.5
(22) Date de dépôt: 12.07.2018
(51) Int. Cl.: B05B 5/053, B05B 12/00, H01B 3/30, B05B 5/16

(54) **ENSEMBLE COMPRENANT UN PULVÉRISATEUR ÉLECTROSTATIQUE ET UN GÉNÉRATEUR UTILISABLE DANS UNE ZONE À ATMOSPHÈRE EXPLOSIBLE**
ANORDNUNG, DIE EINEN ELEKTROSTATISCHEN ZERSTÄUBER UND EINEN GENERATOR UMFASST, DER IN EINER ZONE MIT EXPLOSIONSFÄHIGER ATMOSPHÄRE EINGESETZT WERDEN KANN
ASSSEMBLY COMPRISING AN ELECTROSTATIC SPRAYING DEVICE AND A GENERATOR FOR USE IN AN EXPLOSIVE ATMOSPHERE AREA

(30) Priorité: 13.07.2017 FR 1756708
(43) Date de publication de la demande: 16.01.2019
(73) Titulaire: EXEL INDUSTRIES, 51200 Epernay (FR)
(72) Inventeur: GOISOT, Gilles, 75009 Paris (FR); PAGOT, Rémi, 75009 Paris (FR)
(74) Mandataire: Lavoix

(56) Documents cités:
- WO-A1-02/50988
- DE-A1- 3 126 936
- DE-U1-202014 004 365
- FR-A1- 2 374 964
- atexSystem: "Ex-KFF30*CH-J-E Spot ATEX LED 30W", , 17 janvier 2016 (2016-01-17), XP055456118, France Extrait de l'Internet: URL:http://www.atex-system.com/pdf/Ex-KFF3 0_CH-J-E_ATEX_30W_LED_FR_REV0.pdf [extrait le 2018-03-02]

## Description

La présente invention concerne un générateur utilisable dans une zone à atmosphère explosible. Notamment, un tel générateur peut être utilisé pour alimenter un pulvérisateur électrostatique de produit de revêtement. L'invention concerne donc également un ensemble comprenant le pulvérisateur et le générateur.

Dans le domaine du revêtement d'objets, le ou les objets à revêtir sont presque systématiquement disposés dans une cabine fermée, que l'on appelle cabine de pulvérisation. Un opérateur ou plusieurs opérateurs, avec des équipements spécialisés, pénètrent dans la cabine pour pulvériser le produit de revêtement sur les surfaces de l'objet présent dans la cabine. Pour cela, les opérateurs utilisent des pistolets de pulvérisation manuels, et notamment des pistolets électrostatiques. Ce type de pistolet comprend une unité haute tension pour porter le produit de revêtement à la haute tension, et guider ainsi les gouttelettes de produit pulvérisées en sortie du pistolet vers la pièce à revêtir, laquelle est reliée à la terre. Ainsi, au moins un câble électrique relie le pistolet à un générateur haute tension. Egalement, les pistolets comprennent une arrivée d'air, que l'on qualifie d'air de pulvérisation, pour pulvériser le produit sous la forme d'un spray.

Dans certaines applications, comme dans l'aéronautique par exemple, on pulvérise plusieurs couches de produit, parmi lesquelles on retrouve une couche de laque, une couche d'apprêt, une couche d'accrochage et une couche de peinture, notamment de peinture solvantée bi-composants. La couche d'accrochage est à base d'alcool. De plus, le solvant de la peinture comprend souvent des substances chimiques potentiellement inflammables.

Ainsi, les vapeurs de solvant et d'alcool rendent l'atmosphère à l'intérieur de la cabine explosible. On parle d'une zone à atmosphère explosible (ou zone ATEX). De ce fait, le générateur haute-tension est logiquement disposé à l'extérieur de la cabine. Cela pose toutefois un problème pour les cabines de grandes dimensions, telles que les cabines utilisées dans l'aéronautique pour la peinture de la carlingue d'un avion car il n'est pas envisageable d'avoir un câble de plusieurs dizaines voire de centaines de mètres cheminant entre l'opérateur et le générateur.

GB 1 198480 divulgue en figure 2 un pulvérisateur à main comprenant une unité haute-tension alimentée en énergie électrique par un générateur portatif conçu sous forme de sac à dos. Toutefois, ce générateur n'est pas homologué pour une zone ATEX. De plus, le niveau de haute-tension utilisé est de l'ordre de 1kV, ce qui est très insuffisant pour obtenir un effet électrostatique, c'est-à-dire un réel guidage des particules de peinture vers la surface à revêtir, étant donné que l'effet électrostatique est généralement observé à partir de 15 kV et que, pour diminuer les pertes, il est préférable d'utiliser un niveau de haute-tension compris entre 50kV et 60kV, pour une intensité de l'ordre de 80 µA (microampère). Enfin, avec les techniques utilisées à l'époque, ce générateur pèserait dans les 70 kg, ce qui avait des impacts considérables sur la mobilité de l'opérateur. En particulier, avec un tel équipement, l'opérateur ne pouvait pas monter sur des échafaudages, par exemple pour peindre le toit d'une carlingue. De surcroit, l'autonomie était très faible, si bien que ce matériel n'était finalement que peu intéressant d'un point de vue pratique.

Actuellement, les générateurs autonomes homologués pour les zones ATEX ont une puissance qui ne dépasse pas 3 ou 4 W. Les raisons à cela sont les difficultés rencontrées pendant la certification du matériel. Certains organismes de certification refusent d'examiner tout dossier dans lequel ces valeurs sont dépassées. Or, pour une application électrostatique, on a besoin d'une puissance en bout de pistolet de 4 Watts au minimum (P=U*I, soit 50 kV*80 µA =4 W), soit une puissance générée au moins égale à 8 W, en sachant que le rendement est de l'ordre de 0,5.

C'est à ces inconvénients qu'entend plus particulièrement remédier l'invention, en proposant un générateur utilisable en zone ATEX et suffisamment puissant pour alimenter un pulvérisateur électrostatique.

A cet effet l'invention concerne un ensemble comprenant un pulvérisateur électrostatique de produit de revêtement et un générateur utilisable dans une zone à atmosphère explosible, et ayant une puissance supérieure ou égale à 8 Watts, de préférence supérieure à 10 Watts. Conformément à l'invention, l'ensemble comprend une source d'air comprimé reliée à la terre et au moins un tuyau d'amenée d'air reliant la source au pulvérisateur. Le tuyau d'amenée d'air a une résistance électrique inférieure à 1 MOhm, de façon à relier le pulvérisateur à la terre. Aussi, au moins un câble électriquement conducteur relie le générateur et le pulvérisateur, de façon à relier le générateur à la terre.

Selon un autre aspect, l'invention concerne un ensemble comprenant un pulvérisateur électrostatique de produit de revêtement et un générateur utilisable dans une zone à atmosphère explosible, et ayant une puissance supérieure ou égale à 8 Watts, de préférence supérieure à 10 Watts. Conformément à l'invention, l'ensemble comprend une source d'alimentation en produit reliée à la terre et au moins un tuyau d'amenée de produit reliant la source au pulvérisateur. Le tuyau d'amenée de produit a une résistance électrique inférieure à 1 MOhm, de façon à relier le pulvérisateur à la terre. Aussi, au moins un câble électriquement conducteur relie le générateur et le pulvérisateur, de façon à relier le générateur à la terre.

Le fait que le générateur peut être utilisé en atmosphère explosive peut être vérifié directement et avec succès au moyen de tests et de procédures bien connus dans le domaine de la sécurité en zone ATEX.

Selon des aspects avantageux, mais non obligatoires de l'invention, un tel ensemble peut comprendre une ou plusieurs des caractéristiques suivantes, prises dans toute combinaison techniquement admissible :
- La masse du générateur est inférieure à 2kg et le volume du générateur est inférieur à 2000 centimètres cubes.
- Le générateur comprend au moins un élément de batterie, de préférence plusieurs éléments de batterie formant ensemble une batterie.
- Le générateur comprend un système pour déconnecter chaque élément de batterie lorsque le générateur est éteint.
- Chaque élément de batterie, et notamment chacune des bornes de connexion de la ou des éléments de batterie, comprend un surmoulage extérieur en matériau électriquement isolant.
- Le générateur comprend des composants électroniques de conversion d'énergie, ces composants étant de préférence encapsulés à l'intérieur d'une enceinte en résine.
- Chaque composant électronique est prévu en plusieurs exemplaires et/ou dimensionné pour fonctionner en sous-capacité par rapport à sa puissance nominale en conditions de fonctionnement normales du générateur, notamment à un tiers de sa puissance nominale.
- Le tuyau d'amenée d'air et/ou le tuyau d'amenée de produit a une résistance linéique inférieure à 20 kOhm par mètre.

L'invention et d'autres avantages de celle-ci apparaitront plus clairement à la lumière de la description qui va suivre d'un mode de réalisation d'un générateur conforme à son principe, donnée uniquement à tire d'exemple et faite en référence aux dessins annexés dans lesquels :
- La figure 1 est une vue en perspective schématique montrant le générateur conforme à l'invention accroché à la ceinture d'un opérateur ;
- La figure 2 est une vue à plus grande échelle, et sous un autre angle, du générateur de la figure 1 ;
- La figure 3 est une vue schématique en coupe du générateur des figures 1 et 2 ;
- La figure 4 est un schéma d'un ensemble comprenant le générateur et un pulvérisateur électrostatique relié au générateur ; et
- La figure 5 est un diagramme des liaisons entre les différents composants et organes de l'ensemble de la figure 4, notamment entre les composants de conversion d'énergie.

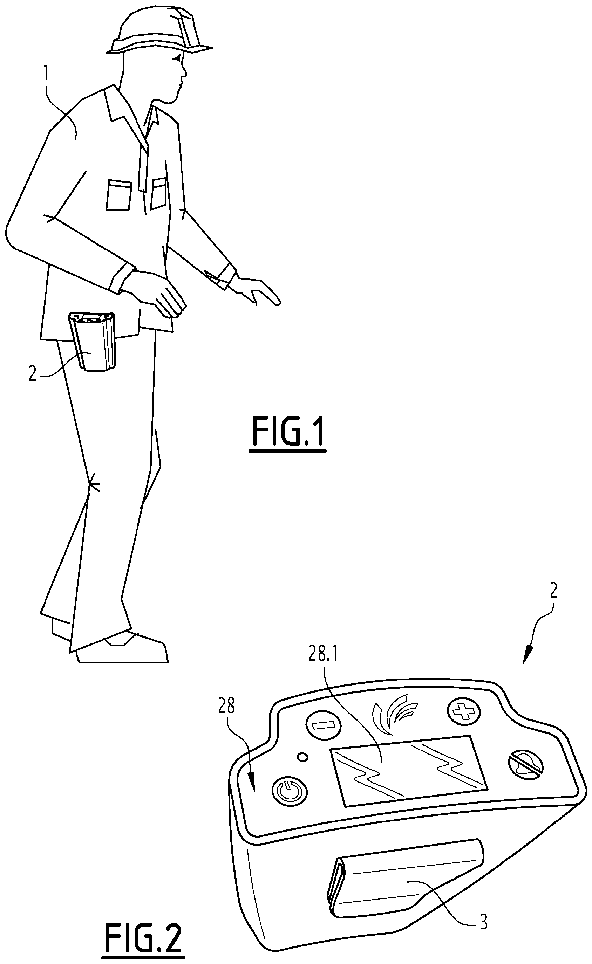

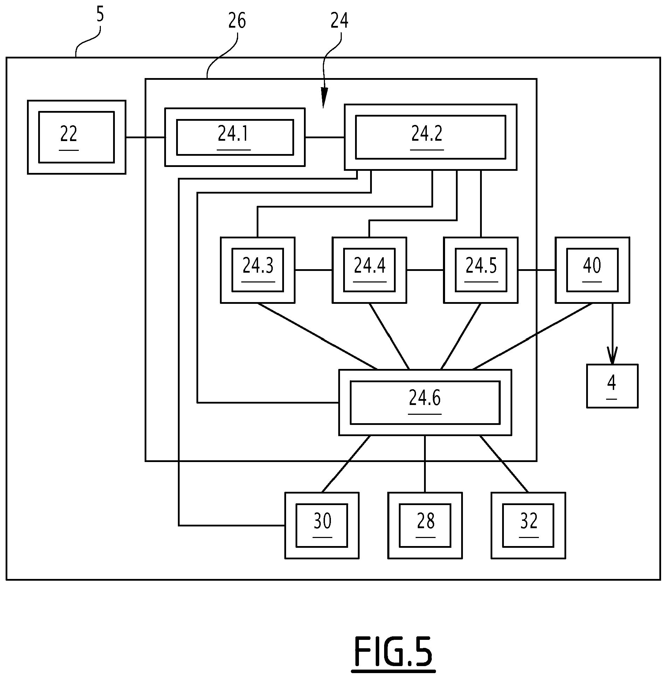

Les figures 1 à 4 montrent, en perspective et en coupe, un générateur 2 utilisable dans une zone à atmosphère explosible 5 (zone ATEX). La zone ATEX 5 est représentée schématiquement par un encadré à la figure 5. Typiquement, la zone ATEX 5 est formée par le volume interne d'une cabine de pulvérisation, notamment une cabine de grande dimension destinée à recevoir la carlingue d'un avion.

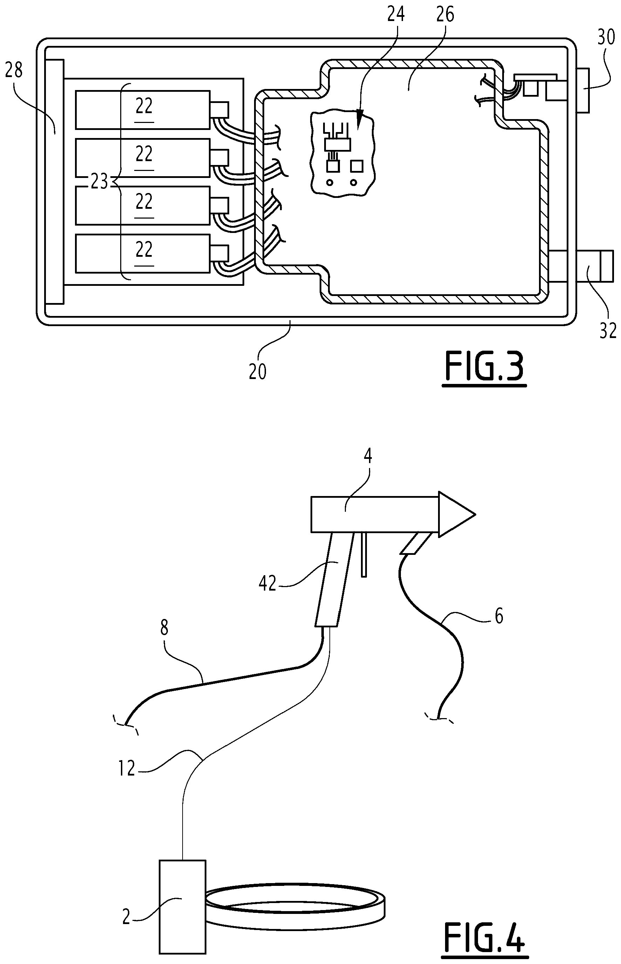

Le générateur 2 a une puissance supérieure ou égale à 8 Watts, de préférence supérieure à 10 Watts. De cette façon, le générateur 2 est capable de délivrer une puissance électrique suffisante pour alimenter un pulvérisateur électrostatique 4 de produit de revêtement, lequel est représenté schématiquement à la figure 4. Le produit de revêtement peut être de la peinture, du vernis, un apprêt, un enduit, etc.

Comme visible à la figure 1, le générateur 2 comprend un boitier 20. Ici, la masse du générateur est avantageusement inférieure à 2kg et son volume est inférieur à 2000 cc. Ainsi, le générateur 2 est suffisamment compact et léger pour pouvoir être transporté par un opérateur 1, notamment à la ceinture. Pour cela, le générateur 2 comprend, dans l'exemple des figures 1 et 2, une agrafe de ceinture 3.

Avantageusement, le générateur 2 comprend au moins un, de préférence plusieurs éléments de batterie 22. L'élément unique 22 ou l'ensemble des éléments 22 forme une batterie 23. Chaque élément de batterie 22 délivre une tension de l'ordre de 10 à 18 V. A charge maximale, les éléments 22 délivrent une tension de l'ordre de 16V à 18V.

Dans l'exemple, il y a quatre éléments 22 qui sont connectés deux à deux en série afin de de former deux sous ensemble. Les deux sous ensemble sont connectés en parallèle. Ainsi, chaque sous ensemble délivre une tension de l'ordre de 20 à 36 V. De cette façon, le générateur peut fonctionner même lorsqu'un ou deux éléments 22 sont défaillants et même en cas d'emballement thermique de l'un des éléments 22. Ainsi la sécurité des personnes et des biens n'est pas affectée.

Ici, les éléments de batterie 22 sont du type lithium-ion. Les éléments 22 confèrent au générateur une certaine autonomie, dans le sens où le générateur 2 peut fonctionner en étant déconnecté de toute source d'énergie électrique, comme le réseau. On parle d'un générateur autonome.

En option, le générateur 2 comprend un système (non représenté) pour déconnecter chaque élément de batterie 22 lorsque le générateur 2 est éteint. De cette manière, les éléments 22 ne débitent pas de courant lorsque le générateur 2 n'est pas utilisé.

Chaque élément 22 comprend un surmoulage extérieur (non représenté), dans lequel sont ménagés des évents. Ces évents permettent d'évacuer les dégagements gazeux des batteries 22. En outre chaque élément de batterie 22 est équipé d'un fusible mécanique (non représenté) qui permet de limiter la pression des gaz en cas de défaillance de l'évent

Avantageusement, le surmoulage de chaque élément 22 est effectué en matériau électriquement isolant, par exemple en matière plastique. Les bornes de connexion (+ et - ) de chaque élément 22 sont également surmoulées, ce qui crée une couche d'isolation entre les deux bornes. Grâce à cette couche, la distance physique entre les deux bornes de chaque élément de batterie peut être réduite, ce qui permet de gagner en compacité. A titre d'exemple, on réduit l'épaisseur du générateur de l'ordre de 15mm, c'est-à-dire un gain de l'ordre de 20%.

Dans l'exemple, le générateur 2 comprend une partie électronique de conversion formée par un ensemble de composants électroniques 24 de conversion d'énergie.

Dans l'exemple, les composants électroniques 24 appartiennent à un circuit imprimé (PCB), c'est-à-dire un support permettant de maintenir et relier électriquement les composants électroniques 24 entre eux. Notamment, le circuit imprimé est un circuit multicouche, comportant au moins trois couches conductrices, séparées entre elles par des couches isolantes.

Comme visible à la figure 3, ces composants 24 sont logés à l'intérieur d'une enceinte 26 et noyés à l'intérieur d'un matériau isolant, de type résine, représentée symboliquement avec un arrachement de matière pour permettre la visualisation des composants électroniques 24. Cette résine est une résine spécifique à la protection en atmosphère explosible, qui est généralement de type époxy et/ou polyuréthane.

Les éléments 22 et toute la partie électronique de conversion d'énergie sont logées à l'intérieur du boitier 20, lequel est fermé de manière hermétique, par exemple d'un degré IP 54 minimum, selon le standard international de la Commission électrotechnique internationale relatif à l'étanchéité (repris par la norme européenne EN 60529).

Comme visible à la figure 5, les composants électroniques 24 comprennent un ou plusieurs organes 24.1 de protection des éléments de batterie 22. Ces organes 24.1 permettent de déconnecter les éléments en cas de surintensité, c'est-à-dire lorsque l'on détecte la présence d'un courant trop élevé. Notamment, ces organes 24.1 peuvent comprendre une ou plusieurs diodes, notamment des diodes Zener, des résistances, ou encore des condensateurs, utilisés à un facteur de charge inférieur ou égal à 1/3 de leur capacité nominale ce qui permet de les considérer comme des composants infaillibles au sens de la norme EN 62061.

Les composants électroniques 24 comprennent également un système de contrôle 24.2 chargée de contrôler l'énergie puisée dans les éléments 22 et de dissiper tout surplus d'énergie. Notamment, ce système de contrôle 24.2 comprend des rehausseurs et des abaisseurs de tension.

On retrouve également des convertisseurs SEPIC (« Single Ended Primary Inductor Converter ») 24.3, un onduleur 24.4, un variateur de fréquence 24.5 et une unité électronique de commande 24.6. L'unité électronique de commande 24.6 comprend avantageusement un processeur qui contrôle notamment les convertisseurs 24.3, l'onduleur 24.4 et le variateur 24.5.

Avantageusement, les composants électroniques 24 sont des composants qui, dans le domaine de la sécurité en zone ATEX, sont qualifiés d'infaillibles selon la norme EN 62061. En théorie, aucun composant électronique n'est infaillible. Au sens de la règlementation applicable en ATEX, et donc au sens du présent document, c'est la manière avec laquelle les composants sont utilisés qui les rendent infaillibles.

En particulier, les composants 25 sont qualifiés d'infaillibles car, d'une part, ils sont avantageusement sélectionnés parmi les mieux notés dans leur catégorie, en termes de qualité et de fiabilité. Les notes sont attribuées selon le classement publié par la Commission Electrotechnique internationale, document IEC61508. D'autre part, chaque composant électronique 24 est prévu en plusieurs exemplaires pour assurer une même fonction (redondance matérielle) ou surdimensionné par rapport à l'application considérée. Dans ce dernier cas, cela signifie que le composant est dimensionné pour fonctionner en sous-capacité par rapport à sa puissance nominale en conditions normales de fonctionnement, notamment à un tiers de sa puissance nominale. En d'autres termes, on utilise un facteur (ou coefficient) de sécurité de l'ordre de 3.

La puissance nominale est la puissance reçue par un composant quand il fonctionne dans des conditions normales. Dans l'absolu, il faut que la puissance électrique fournie au composant corresponde à sa puissance nominale. Si elle est supérieure à sa puissance nominale, il y a un risque de détérioration. Prenons l'exemple d'une résistance, en supposant que la résistance est prévue pour dissiper une puissance électrique de 0,33 Watt environ en conditions normales, alors la résistance qui sera sélectionnée aura une puissance nominale de l'ordre de 1 Watt, soit 3 fois plus que nécessaire.

Le même effet peut être obtenu en prévoyant des redondances, c'est à dire en multipliant le nombre de composants qui sont normalement nécessaires par trois (double redondance). Ainsi, pour revenir à l'exemple précédent, au lieu d'avoir une résistance ayant une puissance nominale de 0,33 Watts, on utilisera trois résistances en série, chacune ayant une puissance nominale de 0,33 Watts. Le principe est le suivant : le système doit être capable de résister à deux défaillances survenues simultanément. Ainsi, dans l'éventualité où deux résistances grillent, la dissipation d'énergie peut malgré tout être assurée par la troisième résistance.

Avantageusement, les éléments 22 sont du type rechargeable. Le générateur 2 comprend donc une interface de recharge (non représentée).

Le pulvérisateur 4 est un pistolet comprenant une unité haute tension 40, conçue pour charger électrostatiquement le produit de revêtement suivant une certaine caractéristique de tension/courant lorsqu'elle est alimentée en énergie électrique. L'unité haute tension 40 comprend des organes multiplicateurs et un transformateur pour élever le niveau de tension.

La caractéristique tension/courant de l'unité haute tension correspond au rapport entre la tension et le courant délivrés par l'unité haute tension. Il s'agit donc d'une courbe représentative de l'évolution de la tension en fonction du courant. Typiquement, la caractéristique est une droite de pente négative.

La caractéristique tension/courant est ajustée en fonction de la distance de pulvérisation. Notamment, la tension est augmentée lorsque l'on éloigne le pulvérisateur de la pièce à revêtir. A l'inverse, la tension chute lorsque l'on approche le pulvérisateur de la pièce à revêtir. Le réglage de la caractéristique est avantageusement effectué automatiquement grâce à l'analyse permanente et rapide de l'évolution de la consommation de courant en fonction du temps (dI/dt), l'analyse dynamique de ce paramètre par le microprocesseur 24.6 permettant de rendre compte de manière très précise de la distance entre le pistolet de pulvérisation et la pièce à peindre et de leur vitesse relative de rapprochement.

L'unité haute tension 40 est alimentée en basse tension par l'intermédiaire d'un câble électrique 12, qui est relié au générateur 2.

Comme visible à la figure 2, le générateur 2 comprend préférentiellement une interface homme-machine (IHM) 28 située sur une face du boitier 20. L'interface 28 comprend deux boutons de réglage « + » et « - », permettant de sélectionner une caractéristique tension/courant, un bouton on/off et un écran d'affichage 28.1. Par exemple, l'écran 28.1 pourra être utilisé pour afficher la caractéristique tension/courant sélectionnée et/ou le taux de charge global de la batterie 23.

La référence 30 désigne le raccord du générateur 2 pour le raccordement du câble 12 d'alimentation de l'unité haute tension 40.

Le pistolet 4 est alimenté en produit de revêtement par un tuyau 6, que l'on qualifie de tuyau d'amenée de produit, et en air comprimé par un tuyau 8, que l'on qualifie de tuyau d'amenée d'air. Le tuyau 8 s'étend donc entre le pulvérisateur 4 et une source d'air comprimé (non représentée). Le tuyau 6 s'étend entre le pulvérisateur 4 et la source d'alimentation en produit.

Avantageusement, cette source d'air comprimé et/ou cette source d'alimentation en produit sont reliées à la terre. Le tuyau d'amenée d'air 8 et/ou le tuyau d'amenée de produit 6 ont une résistance électrique inférieure à 1 MOhm (Méga Ohm), de façon à relier le pulvérisateur 4 à la terre. Effectivement, étant donné que la crosse 42 du pulvérisateur 4 est prise en main par l'opérateur 1, celle-ci doit toujours être reliée à la terre. Dans l'art antérieur, il y avait donc au moins une, de préférence deux liaisons entre la crosse du pistolet et la carcasse du générateur, laquelle était reliée directement à la terre. Or, dans l'invention, le générateur 2 est porté par l'opérateur 1 et ne peut donc pas être relié à la terre directement. L'idée est donc de relier le générateur 2 à la terre via la crosse 42 du pistolet et les tuyaux 6 et 8 amenant le produit et l'air comprimé utilisés pour la pulvérisation, en prévoyant un câble électriquement conducteur 12 reliant le générateur 2 et le pulvérisateur 4.

Avantageusement, les tuyaux 6 et/ou 8 sont fabriqués dans un matériau électriquement conducteur, par exemple en polymère et a une résistance linéique inférieure à 20 kOhm par mètre, de telle sorte que la longueur des tuyaux 6 et/ou 8 peuvent aller jusqu'à 50 mètres au maximum, voir jusqu'à 100 mètres si l'on additionne la résistance des deux tuyaux. Ainsi, l'opérateur 1 ne sera pas limité par la longueur du tuyau lors de ses déplacements à l'intérieur de la cabine de pulvérisation (non représentée).

De préférence, et toujours pour accroitre la sécurité, le câble électriquement conducteur 12 de liaison à la terre est du type multibrins (ou multifilaire).

Les tuyaux 6 et/ou 8 sont conducteurs à la fois sur leurs surfaces intérieures, extérieures et dans leur masse, c'est-à-dire dans leur épaisseur. Dans ces conditions, ils peuvent être assimilés à des conducteurs multifilaires.

Avantageusement, le générateur 2 est équipé d'une interface 32 que l'on peut qualifier d'interface de maintenance. Cette interface est représentée uniquement de manière schématique à la figure 5. Il s'agit en fait d'un port de connexion pour brancher un outil d'analyse (non représenté), tel qu'une valise de diagnostic. Un tel outil permet de récupérer un certain nombre d'informations, comme par exemple le taux de charge des batteries 22, le nombre d'actions sur la gâchette du pistolet, la durée cumulée de fonctionnement de l'unité haute tension 40, etc. Pour ce faire, l'unité électronique de commande 24.6 et l'unité haute tension 40 peuvent être reliées par un câble servant au transport d'informations (numériques et/ou analogiques).

En variante non représentée, le générateur 2 pourrait prendre la forme d'un sac à dos, d'un système de harnais ou encore être monté sur un chariot indépendant roulant au sol.

Selon une autre variante non représentée, l'interface 28 pourra comprendre une ou plusieurs LED, notamment trois LED. Une LED verte pourra être allumé dans des conditions normales de fonctionnement, une LED orange pourra être allumée lorsque les batteries 22 sont par exemple à 10% de leur capacité et une LED rouge pourra être allumée en cas de perte d'autonomie imminente, c'est-à-dire lorsque les batteries sont pratiquement vides. Avantageusement, la LED rouge pourra clignoter 2 ou 3 min avant la coupure de courant.

## Revendications

1. Ensemble comprenant un pulvérisateur électrostatique (4) de produit de revêtement et un générateur (2) utilisable dans une zone à atmosphère explosible (5), ce générateur ayant une puissance supérieure ou égale à 8 Watts, de préférence supérieure à 10 Watts,
**caractérisé en ce que** :
- l'ensemble comprend une source d'air comprimé reliée à la terre et au moins un tuyau d'amenée d'air (8) reliant la source au pulvérisateur (4),
- le tuyau d'amenée d'air a une résistance électrique inférieure à 1 MOhm, de façon à relier le pulvérisateur à la terre, et
- au moins un câble (12) électriquement conducteur relie le générateur (2) et le pulvérisateur (4), de façon à relier le générateur à la terre.

2. Ensemble comprenant un pulvérisateur électrostatique (4) de produit de revêtement et un générateur (2) utilisable dans une zone à atmosphère explosible (5), ce générateur ayant une puissance supérieure ou égale à 8 Watts, de préférence supérieure à 10 Watts,
**caractérisé en ce que** :
- l'ensemble comprend une source d'alimentation en produit reliée à la terre et au moins un tuyau d'amenée de produit (6) reliant la source au pulvérisateur (4),
- le tuyau d'amenée de produit (6) a une résistance électrique inférieure à 1 MOhm, de façon à relier le pulvérisateur à la terre, et
- au moins un câble (12) électriquement conducteur relie le générateur (2) et le pulvérisateur (4), de façon à relier le générateur à la terre.

3. Ensemble selon la revendication 1, **caractérisé en ce que** le tuyau d'amenée d'air (8) et/ou le tuyau d'amenée de produit (6) a une résistance linéique inférieure à 20 kOhm par mètre.

4. Ensemble selon l'une des revendications précédentes, **caractérisé en ce que** la masse du générateur est inférieure à 2kg et le volume du générateur est inférieur à 2000 centimètres cubes.

5. Ensemble selon l'une des revendications précédentes, **caractérisé en ce que** le générateur comprend au moins un élément de batterie (22), de préférence plusieurs éléments de batterie (22) formant ensemble une batterie (23).

6. Ensemble selon la revendication 5, **caractérisé en ce que** le générateur (2) comprend un système pour déconnecter chaque élément de batterie (22) lorsque le générateur est éteint.

7. Ensemble selon la revendication 5 ou 6, **caractérisé en ce que** chaque élément de batterie (22), et notamment chacune des bornes de connexion de la ou des éléments de batterie, comprend un surmoulage extérieur en matériau électriquement isolant.

8. Ensemble selon l'une des revendications précédentes, **caractérisé en ce que** le générateur comprend des composants électroniques (24) de conversion d'énergie, ces composants étant de préférence encapsulés à l'intérieur d'une enceinte en résine (26).

9. Ensemble selon la revendication 8, **caractérisé en ce que** chaque composant électronique (24) est prévu en plusieurs exemplaires et/ou dimensionné pour fonctionner en sous-capacité par rapport à sa puissance nominale en conditions de fonctionnement normales du générateur, notamment à un tiers de sa puissance nominale.

## Patentansprüche

1. Anordnung, die eine elektrostatische Sprühvorrichtung (4) für Beschichtungsmaterial und einen in einem Bereich mit explosionsfähiger Atmosphäre (5) einsetzbaren Generator (2) umfasst, wobei der Generator eine Leistung von mindestens 8 Watt, vorzugsweise von mehr als 10 Watt, aufweist,
**dadurch gekennzeichnet, dass**:
- die Anordnung eine geerdete Druckluftquelle und mindestens eine die Druckluftquelle mit der Sprühvorrichtung (4) verbindende Luftzuführleitung (8) umfasst,
- die Luftzuführleitung zur Erdung der Sprühvorrichtung (4) einen elektrischen Widerstand von weniger als 1 MOhm aufweist und
- mindestens ein elektrisch leitendes Kabel (12) den Generator (2) und die Sprühvorrichtung (4) zur Erdung des Generators verbindet.

2. Anordnung, die eine elektrostatische Sprühvorrichtung (4) für Beschichtungsmaterial und einen in einem Bereich mit explosionsfähiger Atmosphäre (5) einsetzbaren Generator (2) umfasst, wobei der Generator eine Leistung von mindestens 8 Watt, vorzugsweise von mehr als 10 Watt, aufweist,
**dadurch gekennzeichnet, dass**:
- die Anordnung eine geerdete Materialquelle und mindestens eine die Materialquelle mit der Sprühvorrichtung (4) verbindende Materialzuführleitung (6) umfasst,
- die Materialzuführleitung (6) zur Erdung der Sprühvorrichtung einen elektrischen Widerstand von weniger als 1 MOhm aufweist und
- mindestens ein elektrisch leitendes Kabel (12) den Generator (2) und die Sprühvorrichtung (4) zur Erdung des Generators verbindet.

3. Anordnung nach Anspruch 1, **dadurch gekennzeichnet, dass** die Luftzuführleitung (8) und/oder die Materialzuführleitung (6) einen längenbezogenen Widerstand von weniger als 20 kOhm pro Meter aufweist.

4. Anordnung nach einem der vorhergehenden Ansprüche, **dadurch gekennzeichnet, dass** die Masse des Generators weniger als 2 kg beträgt und das Volumen des Generators weniger als 2000 Kubikzentimeter beträgt.

5. Anordnung nach einem der vorhergehenden Ansprüche, **dadurch gekennzeichnet, dass** der Generator mindestens ein Akkumulatorelement (22), vorzugsweise mehrere Akkumulatorelemente (22), umfasst, die zusammen einen Akkumulator (23) bilden.

6. Anordnung nach Anspruch 5, **dadurch gekennzeichnet, dass** der Generator (2) ein System zur Trennung jedes Akkumulatorelements (22) bei ausgeschaltetem Generator umfasst.

7. Anordnung nach Anspruch 5 oder 6, **dadurch gekennzeichnet, dass** jedes Akkumulatorelement (22) und insbesondere jede Anschlussklemme des Akkumulatorelements bzw. der Akkumulatorelemente eine äußere Umspritzung aus elektrisch isolierendem Material umfasst.

8. Anordnung nach einem der vorhergehenden Ansprüche, **dadurch gekennzeichnet, dass** der Generator elektronische Bauteile (24) zur Umwandlung von Energie umfasst, wobei diese Bauteile vorzugsweise im Inneren eines Harzgehäuses (26) vergossen sind.

9. Anordnung nach Anspruch 8, **dadurch gekennzeichnet, dass** die elektronischen Bauteile (24) jeweils mehrfach vorgesehen sind und/oder so dimensioniert sind, dass sie unter normalen Betriebsbedingungen des Generators bezogen auf ihre nominale Leistung mit Unterkapazität, insbesondere mit einem Drittel ihrer nominalen Leistung, betreibbar sind.

## Claims

1. An assembly comprising an electrostatic sprayer (4) for a coating product and a generator (2) usable in an explosive atmosphere zone (5), this generator having a power greater than or equal to 8 Watts, preferably greater than 10 Watts,
**characterized in that**:
- the assembly comprises a compressed air source connected to the ground and at least one air intake hose (8) connecting the source to the sprayer (4),
- the air intake hose having an electric resistance below 1 MOhm, so as to connect the sprayer to the ground, and
- at least one electrically conductive cable (12) connects the generator (2) and the sprayer (4), so as to connect the generator to the ground.

2. An assembly comprising an electrostatic sprayer (4) for a coating product and a generator (2) usable in an explosive atmosphere zone (5), this generator having a power greater than or equal to 8 Watts, preferably greater than 10 Watts,
**characterized in that**:
- the assembly comprises a product supply source connected to the ground and at least one product intake hose (6) connecting the source to the sprayer (4),
- the product intake hose (6) having an electric resistance below 1 MOhm, so as to connect the sprayer to the ground, and
- at least one electrically conductive cable (12) connects the generator (2) and the sprayer (4), so as to connect the generator to the ground.

3. The assembly according to claim 1, **characterized in that** the air intake hose (8) and/or the product intake hose (6) has a resistance per unit length below 20 kOhm per meter.

4. The assembly according to any one of the preceding claims, **characterized in that** the mass of the generator is below 2 kg and the volume of the generator is below 2000 cubic centimeters.

5. The assembly according to any one of the preceding claims, **characterized in that** the generator comprises at least one battery element (22), preferably several battery elements (22) together forming a battery (23).

6. The assembly according to claim 5, **characterized in that** the generator (2) comprises a system for disconnecting each battery element (22) when the generator is turned off.

7. The assembly according to claim 5 or 6, **characterized in that** each battery element (22), and in particular each of the connection terminals of the battery element(s), comprises an outer overmolding made from an electrically insulating material.

8. The assembly according to one of the preceding claims, **characterized in that** the generator comprises electronic energy conversion components (24), these components preferably being encapsulated inside a resin enclosure (26).

9. The assembly according to claim 8, **characterized in that** each electronic component (24) is provided in several copies and/or dimensioned to work below capacity relative to its rated power under normal operating conditions of the generator, in particular at one third of its rated power.
